# EUROPÄISCHE PATENTSCHRIFT

(11) **EP 1 900 950 B1**
(45) Veröffentlichungstag und Bekanntmachung des Hinweises auf die Patenterteilung: **03.10.2018**
(21) Anmeldenummer: 07114758.1
(22) Anmeldetag: 22.08.2007
(51) Int. Cl.: F16C 33/20, D02G 3/04, D02G 3/44

(54) **KUNSTSTOFFGLEITSCHICHT UND GLEITELEMENT MIT EINER SOLCHEN SCHICHT**
PLASTIC SLIDING LAYER AND SLIDING ELEMENT WITH SUCH LAYER
COUCHE DE GLISSEMENT EN PLASTIQUE ET ÉLÉMENT COULISSANT À UNE TELLE COUCHE

(30) Priorität: 14.09.2006 DE 102006043065
(43) Veröffentlichungstag der Anmeldung: 19.03.2008
(73) Patentinhaber: Federal-Mogul Deva GmbH, 35260 Stadtallendorf (DE)
(72) Erfinder: Roos, Udo, 35315 Homburg/Ohm (DE); Laal Riahi, Kamran, 35037 Marburg (DE); Linker, Armin, 35260 Stadtallendorf (DE)
(74) Vertreter: Mehler Achler

(56) Entgegenhaltungen:
- WO-A1-2004/030880
- WO-A1-2005/017240
- US-A- 4 867 889
- US-A1- 2002 155 287
- US-A1- 2004 213 492

## Beschreibung

Die Erfindung betrifft eine Gleitschicht auf Basis eines faserverstärkten Kunststoffes mit einer Kunststoffmatrix und einem Kunststofffaden als Verstärkungselement. Sie betrifft ferner ein Gleitelement mit einer solchen Gleitschicht.

Weiterhin betrifft sie die Verwendung eines Kunststofffadens mit Polyesterfilamenten und darin eingesponnenen PTFE-Partikeln als Verstärkungselement in einem faserverstärkten Kunststoff zur Herstellung einer Gleitschicht eines Gleitelements.

Eine gattungsgemäße Gleitschicht und ein gattungsgemäßes Gleitelement sind z.B. aus der US 2002/0155287 A1 vorbekannt.

Der Einsatz von Faserverbundwerkstoffen für Gleitlager, insbesondere gewickelte Kunststoffgleitlager auf Basis von Epoxydharzen ist bekannt. Solche Gleitlager bestehen aus einem einschichtigen Gleitschichtwerkstoff oder aus einem aus zwei Schichten, einer Tragschicht und einer Gleitschicht, aufgebauten Lagerwerkstoff. Die Gleitschicht kann je Anwendungsfall bezogen auf die Tragschicht innen außen liegen. Die Tragschicht ist typischerweise durch eine glasfaser- oder kohlefaserverstärkte Epoxydharzmatrix gekennzeichnet, welche ein sehr hohes Lastaufnahmevermögen aufweist. Die Gleitschicht setzt sich zumeist aus speziellen nicht oder wenig abrasiven Kunststofffasern oder -fäden als Verstärkungselemente, Festschmierstoffen und ebenfalls einer Epoxydharzmatrix zusammen. Die Zusammensetzung wird so eingestellt, dass sich die geforderten tribologischen Eigenschaften einstellen, die je nach Material und Beschaffenheit des Gegenläufers und den Umgebungsbedingungen (Nass- oder Trockenlauf) variieren.
Als Festschmierstoff der selbstschmierenden Gleitschicht ist unter anderem der Einsatz von PTFE (Polytetrafluorethylen) oder Graphit bekannt. Diese Substanzen werden entweder in Partikelform der Kunststoffmatrix beigemischt oder im Fall von PTFE in Form eines Filaments zusammen mit anderen Kunststofffilamenten zu dem Kunststofffaden der Gleitschicht verzwirnt. Als Fadenkunststoff wird im Übrigen bekanntermaßen meist Polyester eingesetzt. Typischerweise werden zwei Polyester- und ein PTFE-Filament miteinander zu einem Faden verzwirnt.
Sowohl die Gleitschicht als auch die Tragschicht des Gleitelements werden durch Aufwickeln des mit Kunstharz getränkten Kunststofffadens bzw. der mit Kunstharz getränkten Glasfaser auf einen rotierenden Dorn (Wickelkern) in Form eines zweischichtigen rotationssymmetrischen Körpers hergestellt. Die so erzeugten Rohre mit Kreisquerschnitt werden nach Aushärten der Kunststoffmatrix zu zylindrischen Buchsen, halbkreisförmigen Lagerschalen und dergleichen weiter verarbeitet.
Zwar hat sich die Verwendung von PTFE als Festschmierstoff in faserverstärkten Kunststoffgleitschichten aufgrund seiner guten Gleitreibungseigenschaften bewährt. Jedoch konnten noch nicht für alle Anwendungen zufrieden stellende tribologische und mechanische Eigenschaften erzielt werden. PTFE ist nämlich bedingt durch die starke zwischenmolekulare Bindung der Kohlenstoff- und Fluoratome sehr reaktionsträge und hat eine sehr geringe Oberflächenspannung. Eine chemische Reaktion der Kunststoffmatrix mit dem PTFE findet deshalb nicht oder nicht nenneswert statt. Insbesondere bei Verwendung der bekannten Kunststofffäden aus zwei Polyester- und einem PTFE-Filament wurde festgestellt, dass die PTFE-Filamente nur eine sehr geringe Haftanbindung zur Kunststoffmatrix erreichten. Dies hat zur Folge, dass die bekannten Gleitschichten nur schwer oder nahezu gar nicht mechanisch nachbearbeitet werden konnten, da die PTFE-Filamente nicht selten aus dem Faserverbund herausgelöst wurden. Die Folge war meistens eine Delamination der Gleitschicht, eine Verschlechterung der tribologischen Eigenschaften und der Verschleißfestigkeit der Gleitschicht.
Aufgabe der vorliegenden Erfindung ist demgemäß eine Gleitschicht bzw. ein Gleitelement mit einer solchen Gleitschicht auf Basis eines faserverstärkten Kunststoffes bereitzustellen, welche leicht herstellbar ist, sich leicht nachbearbeiten lässt und eine hohe Verschleißfestigkeit bei guten Gleiteigenschaften aufweist.
Die Aufgabe wird durch eine Gleitschicht mit den Merkmalen des Anspruchs 1 und durch ein Gleitelement mit den Merkmalen des Anspruchs 12 gelöst. Die Erfindung wird ferner durch die Verwendung eines Kunststofffadens mit den Merkmalen des Anspruchs 19 gelöst. Vorteilhafte Weiterbildungen finden sich in den Unteransprüchen.
Die Gleitschicht auf Basis eines faserverstärkten Kunststoffes weist erfindungsgemäß einen Kunststofffaden als Verstärkungselement auf, der Polyesterfilamente enthält, in welche PTFE-Partikel nicht zusammenhängend eingesponnen sind. Dies hat gegenüber den bekannten gezwirnten Fasern den Vorteil einer größeren Variabilität des Gehaltes der einzelnen Komponenten des Fadens/der Faser, insbesondere seines PTFE-Gehalts. Daher lassen sich bereits bei der Herstellung des Kunststofffadens dessen Eigenschaften sehr viel präziser modifizieren. Aus dem Umstand, dass die PTFE-Partikel im Gegensatz zu dem PTFE-Filament nicht zusammenhängen, d.h durch die innerhalb der Polyesterfilamente zufällig angeordneten und verankerten PTFE-Partikel, erscheint der Kunststoffaden aufgerauter und es wird eine bessere Haftanbindung zwischen dem Kunststofffaden und der Kunststoffmatrix erreicht. Schließlich verstärkt die Einbindung der PTFE-Partikel in den Kunststofffaden den mechanischen Halt derselben vor allem durch Formschluss.

Die Gleitschicht lässt sich deshalb mechanisch, d.h. spanabhebend gut bearbeiten. Die Verwendung des Kunststofffadens mit PTFE-Partikeln in der erfindungsgemäßen Gleitschicht eignet sich daher insbesondere für Präzisionsgleitlager, die beispielsweise durch Bohren, Honen oder dgl. auf Endmaß nachgearbeitet werden müssen. Auch erschließt die erfindungsgemäße Gleitschicht bzw. das erfindungsgemäße Gleitelement andere Anwendungsgebiete, da beispielsweise Schmier- oder Schmutznuten in die Gleitschicht eingearbeitet werden können, mit deren Hilfe Partikel oder Schmierstoffe gezielt ab- oder zugeführt werden können. Neben der besseren Bearbeitbarkeit werden durch die verbesserte Einbindung der PTFE-Partikel auch verbesserte Verschleißwerte insbesondere hinsichtlich des Tiefenverschleißes erzielt.

Auch gegenüber den bekannten Gleitschichten mit PTFE-Partikeln als Festschmierstoff in der Kunststoffmatrix hat die erfindungsgemäße Gleitschicht Vorteile. Auch als Festschmierstoff in der Kunststoffmatrix wirkt sich PTFE nämlich festigkeitsmindernd aus, wodurch die tribologischen Eigenschaften bei hoher Belastung und in wässriger Umgebung beeinträchtigt werden und während die PTFE-Partikel in der Kunststoffmatrix durch unterschiedliche Materialdichte meist eine inhomogene Verteilung einnehmen, ist die Verteilung der Partikel über die gesamte Gleitfläche gesehen sehr homogen, da die Partikel fest in der Faser/dem Faden eingebunden sind. Aufgrund der verbesserten Homogenität und der verbesserten mechanischen Einbindung werden schließlich auch verbesserte tribologische Eigenschaften erzielt. Dies gilt sowohl bei Trockenlauf als auch bei Einsatz in wässriger Umgebung.

Es ist vorteilhaft, wenn der Gewichtsanteil der PTFE-Partikel im Kunststofffaden zwischen 2 Gew.-% und 40 Gew.-% und der Gewichtsanteil der Polyesterfilamente im Kunststofffaden zwischen 60 Gew.-% und 98 Gew.-% beträgt. Besonders bevorzugt beträgt der Gewichtsanteil der PTFE-Partikel im Kunststofffaden zwischen 30 Gew.-% und 36 Gew.-%, während der Gewichtsanteil der Polyesterfilamente im Kunststofffaden zwischen 64 Gew.-% und 70 Gew.-% beträgt.

In diesem Gewichtsverhältnis bleibt die Haftung zwischen dem Kunststofffaden und der Kunststoffmatrix ausreichend hoch, so dass eine gute Bearbeitbarkeit erzielt wird. Andererseits ist der Anteil der PTFE-Partikel ausreichend hoch, um eine gute Gleiteigenschaft zu erzielen.

In einer vorteilhaften Ausführungsform der Gleitschicht weist das Verstärkungselement die Struktur eines aus dem Kunststofffaden erzeugten Gewebes oder Gewirkes auf.

Gemäß einer anderen bevorzugten Ausführungsform weist das Verstärkungselement eine Wickelstruktur auf, die durch Wickeln des Kunststofffadens auf einem Wickelkern erzeugt wurde.

Hierbei kommen die Vorzüge des erfindungsgemäß verwendeten Kunststofffadens besonders gut zum Tragen. Aufgrund seiner Aufgerautheit eignet er sich nämlich hervorragend für die Herstellung von Gleitschichten im Wickelverfahren, bei dem der Faden zunächst durch eine Tränkwanne mit Kunstharz geführt wird, und dabei ausreichend von dem Kunstharz durchtränkt wird. Das Wickelverfahren bietet den Vorteil, dass damit eine bestimmte Wickelstruktur erzeugt werden kann, welche auf die beabsichtigte Anwendung des Gleitelementes bzw. der Gleitschicht abgestimmt ist. So können die Fasern möglichst beanspruchungsgerecht, d.h. der Kraft- und Spannungsverteilung entsprechend, im Faserverbund positioniert werden.

Die Kunststoffmatrix besteht bevorzugt aus einem Kunstharz und besonders bevorzugt aus Epoxydharz.

Für manche Anwendungen werden - zusätzlich zu den in den Kunststofffaden eingesponnenen PTFE-Partikeln - bevorzugt auch der Kunststoffmatrix PTFE-Partikel hinzugefügt. Der Anteil der PTFE-Partikel in der Kunststoffmatrix beträgt dabei höchstens 40 Gew.-%.

In einer alternativen Ausführungsform kann die Kunststoffmatrix Graphit-Partikel enthalten. Der Gewichtsanteil der Graphit-Partikel in der Kunststoffmatrix beträgt bevorzugt zwischen 1 Gew.-% und 40 Gew.-%.

Es können ferner sowohl PTFE-Partikel als auch Graphit-Partikel zur Kunststoffmatrix zugegeben werden, deren Gesamtgewichtsanteil vorzugsweise nicht mehr als 40% beträgt.

Das erfindungsgemäße Gleitelement weist eine wie zuvor beschriebene Gleitschicht auf. Bevorzugt weist das Gleitelement ferner eine aus faserverstärktem Kunststoff bestehende Tragschicht auf.

Im Fall von dünnwandigen Gleitlagern besteht aber auch die Möglichkeit, dass diese lediglich aus einer (einschichtigen) Gleitschicht bestehen. Zwar nimmt die mechanische Belastbarkeit ab, jedoch kann diese Bauform in Fällen geringer Belastung aus Kosten- und aus Platzgründen zu bevorzugen sein.

Der faserverstärkte Kunststoff der Tragschicht besteht in einer vorteilhaften Ausführungsform aus einer Kunststoffmatrix mit einer Glasfaser als Verstärkungselement, wobei die Kunststoffmatrix bevorzugt aus einem Kunstharz, besonders bevorzugt aus Epoxydharz besteht.
Wie auch für die Kunststoffmatrix der Gleitschicht eignet sich Epoxydharz auch als Kunststoffmatrix für die Tragschicht aufgrund hervorragender Haftungseigenschaften, mechanischer und dynamischer Eigenschaften. Epoxydharz weist aufgrund seiner molekularen Struktur ferner eine sehr gute Feuchtigkeitsbeständigkeit und vergleichsweise wenig Quellneigung auf. Aufgrund der Verwendung derselben Kunststoffmatrix in der Gleitschicht und der Tragschicht erhöhen sich zudem die Bindungskräfte zwischen der Gleitschicht und der Tragschicht.
Auch das Verstärkungselement der Tragschicht weist bevorzugt die Struktur eines aus der Glasfaser erzeugten Gewebes oder Gewirkes oder in einer anderen bevorzugten Ausführungsform eine Wickelstruktur auf, die durch Wickeln der Glasfaser auf einen Wickeldorn erzeugt wird.
Werden die Gleitschicht und die Tragschicht nacheinander im WickelVerfahren auf einem Wickeldorn abgelegt, erhöht dies die Effizienz der Herstellung des Lagerverbundwerkstoffs.
Weitere Aufgaben, Merkmale und Vorteile der Erfindung werden nachfolgend anhand von Ausführungsbeispielen mit Hilfe der Zeichnungen erläutert. Es zeigen:
- Figur 1: einen Querschnitt durch den in der erfindungsgemäßen Gleitschicht verwendeten Kunststofffaden;
- Figur 2: eine perspektivische Darstellung des erfindungsgemäßen Gleitelements in Form eines Radialgleitlagers;
- Figuren 3a,b: zwei Diagramme des Reibungskoeffizienten eines erfindungsgemäßen Radialgleitlagers unter verschiedenen Belastungen im Trockenlauf und
- Figuren 4a,b: zwei Diagramme des Reibungskoeffizienten eines erfindungsgemäßen Radialgleitlagers unter verschiedenen Belastungen im Nasslauf.

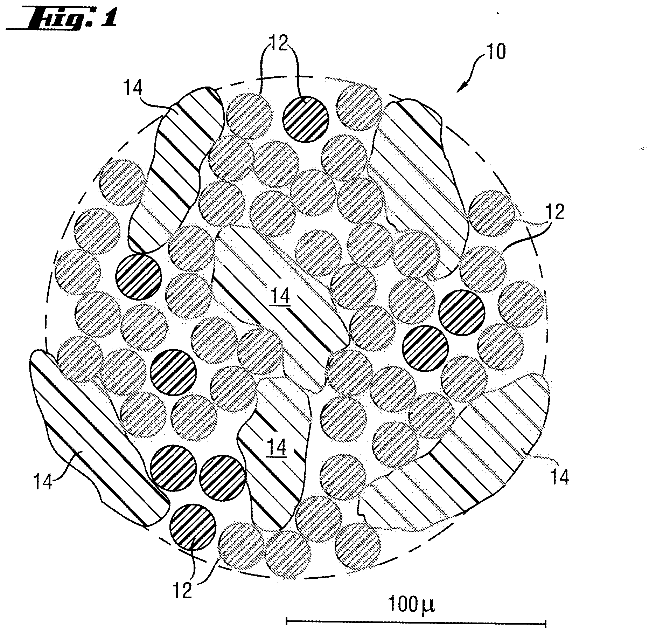

Der erfindungsgemäß für die Gleitschicht als Verstärkungselement verwendete Kunststofffaden 10 ist in vergrößerter Schnittdarstellung in Figur 1 gezeigt. Dieser besteht aus längs des Fadens orientierten Polyesterfilamenten 12 und enthält als zweiter Bestandteil PTFE-Partikel 14, welche in zufälliger Anordnung in die Polyesterfilamente 12 eingesponnen sind. Beim Herstellungsprozess gibt es sehr viele Möglichkeiten die Eigenschaften des Fadens zu modifizieren. Beispielsweise kann die Anzahl der Polyesterfilamente 12 pro Faden 10 je nach Anwendungsfall variiert werden. Dabei sollte jedoch auf ausreichenden Formschluss mit den eingebundenen PTFE-Partikeln 14 geachtet werden.

Ebenso kann das Gewichtsverhältnis zwischen den Polyesterfilamenten 12 und den PTFE-Partikeln 14 variiert werden. Besonders bevorzugt im Hinblick auf die Haftung, Reibung und Gleiteigenschaft hat sich jedoch herausgestellt, wenn im Kunststofffaden der Gewichtsanteil der PTFE-Partikel 14 zwischen 30 Gew.-% und 36 Gew.-% und der Gewichtsanteil der Polyesterfilamente 12 zwischen 64 Gew.% und 70 Gew.% beträgt.

Der Titer des Kunststofffadens 10 gemäß Figur 1 hat einen bevorzugten Wert zwischen 100 dtex und 600 dtex, insbesondere zwischen 400 dtex und 550 dtex (1 dtex = 1 g/1000 m Garn).

Durch diese Parameter wird eine ausreichend feste Einbindung der PTFE-Partikel 14 in die Polyesterfilamente 12 erreicht, die sowohl zu Gunsten der Verschleißfestigkeit als auch für die mechanische Bearbeitung ausreichend Halt finden. Deshalb behält die Gleitschicht ihre guten tribologischen Eigenschaften auch dann, wenn sie beispielsweise durch Fräsen von Nuten oder durch Aufbohren nachgearbeitet wird.

Die PTFE-Partikel 14 sind ferner über die Fadenlänge und damit über die gesamte gewobene, gewirkte oder gewickelte Struktur des Verstärkungselements homogen verteilt. Der Faden 10 lässt sich aufgrund des zum Teil lockeren Verbundes, welcher eine Vielzahl von Kanälen bildet, hervorragend benetzen und damit gut verarbeiten. Die in die Tiefe der Kanäle eindringende Vernetzung der Matrix sorgt für eine verbesserte Haftanbindung.

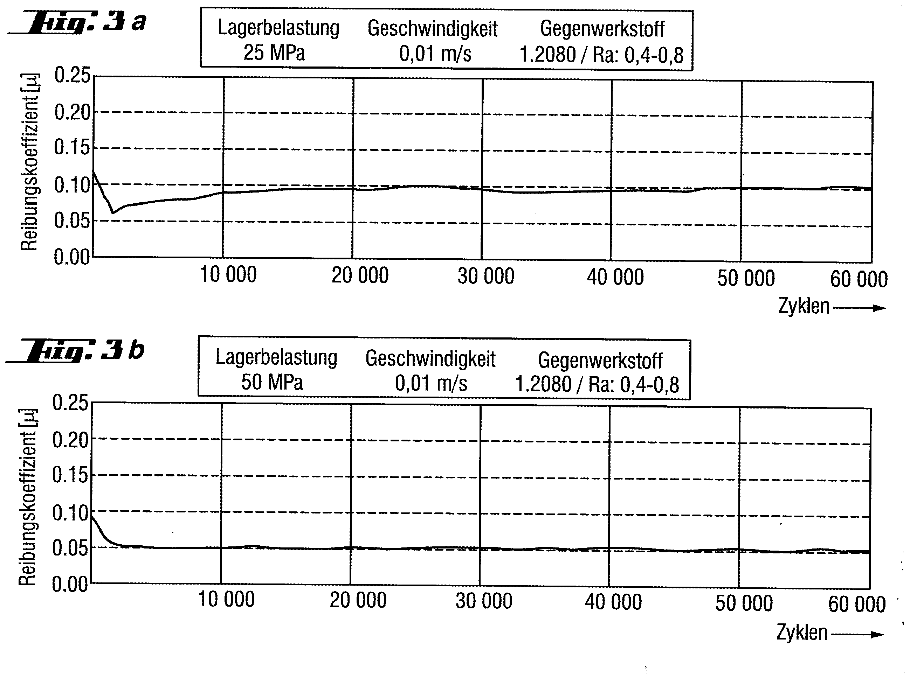

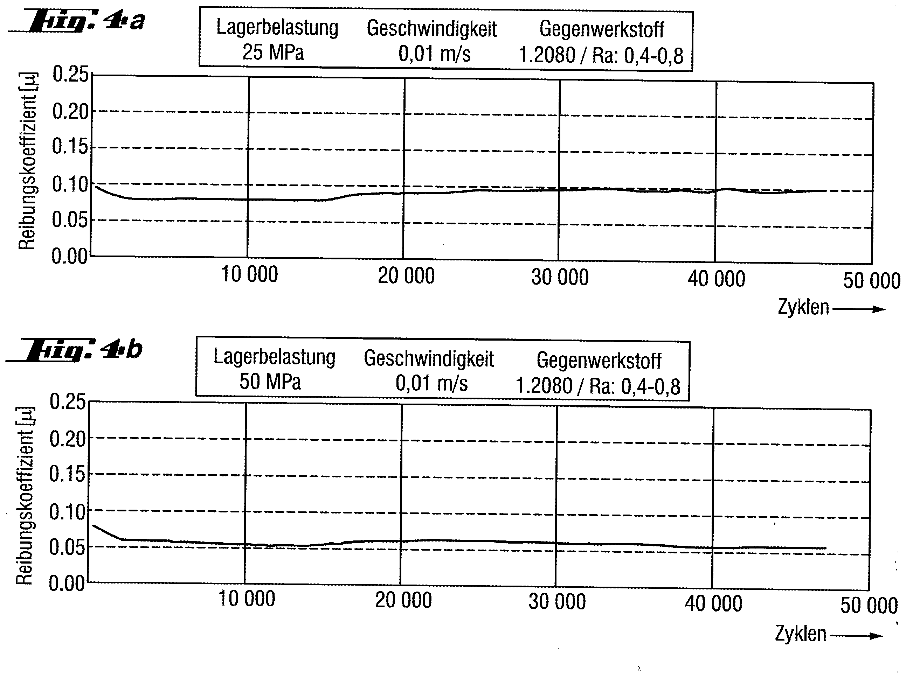

Insgesamt erscheint der Kunststofffaden 10 wie auch die fertige Gleitschicht aufgeraut oder faserig. Diese optische Rauhigkeit ist auf die zufällig orientierten PTFE-Partikel 14 zurückzuführen und aufgrund deren sehr guter Gleiteigenschaft nicht mit einem erhöhten Reibwert verbunden. Insgesamt ist die Gleiteigenschaft der erfindungsgemäßen Gleitschicht in verschiedenen Anwendungen auch über lange Beanspruchungsdauer gleich bleibend gut, wie im Zusammenhang mit den Diagrammen gemäß Figuren 3 und 4 erkennbar wird.

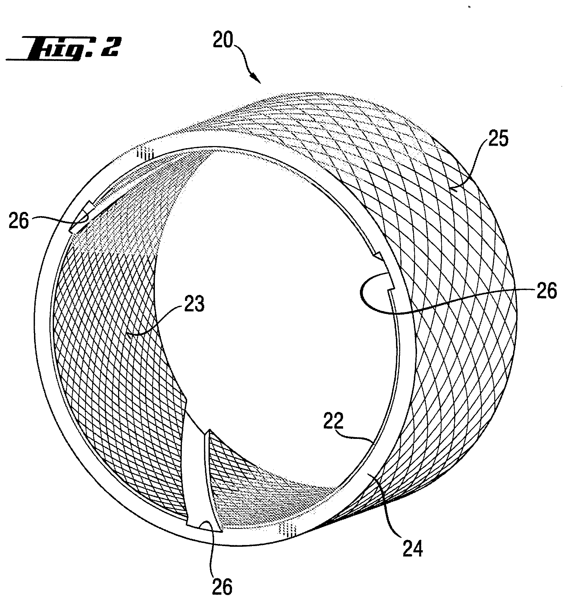

Ein Anwendungsbeispiel zeigt das Gleitelement, in diesem Fall eine Radialgleitlagerbuchse 20 gemäß Figur 2. Diese weist auf ihrer Innenseite eine Gleitschicht 22 und auf ihrer Außenseite eine Tragschicht 24 auf. Die Gleitschicht 22 ist radial dünner ausgebildet als die Tragschicht 24.

Beide Schichten 22, 24 sind nacheinander im Wickelverfahren auf einem Wickeldorn abgelegt worden, wodurch die durch Kreuzschraffur dargestellte Wickelstruktur 23 bzw. 25 entsteht. Erkennbar ist weiterhin, dass der Abstand der Fäden in der Wickelstruktur 25 der Tragschicht 24 größer ist als in der Wickelstruktur 23 der Gleitschicht 22. Hiermit sei angedeutet, dass die Strukturen individuell an unterschiedliche Anforderungen angepasst werden können. Das Wickeln stellt für rotationssymmetrische Gleitelemente ein besonders einfaches und kostengünstiges Herstellungsverfahren dar, wobei sich die Wickelstrukturen 23 bzw. 25 der Verstärkungselemente der Gleitschicht 22 wie auch der Tragschicht 24 auf einfache Weise an die mechanischen Anforderungen des Lagers anpassen lassen. Neben den dargestellten einfachen Kreuzstrukturen lassen sich die Fäden nicht nur einzeln sondern beispielsweise auch zu Bündeln gruppiert wickeln, wodurch bevorzugt das Verstärkungselement der Tragschicht mit einer Kreuzstruktur gruppiert auf einen Wickeldorn gewickelter Faden- oder Faserbündel erzeugt werden kann.

Die Gleitschicht weist auf Ihrer nach innen gewandten Seite Schmutznuten 26 auf, die nach Aushärten des fertigen Wickelkörpers und Abtrennen der Lagerbuchse durch Räumen, Bohren, Drehen oder dgl. in die Gleitschicht eingearbeitet werden. Dies ist aufgrund der zuvor beschriebenen Eigenschaften des erfindungsgemäß verwendeten Fadens als Verstärkungselement möglich, ohne die tribologischen Eigenschaften der Gleitschicht zu beeinträchtigen.

Während in der Gleitschicht 22 und der Tragschicht 24 unterschiedliche Verstärkungselemente, nämlich der in Figur 1 dargestellte Kunststofffaden einerseits bzw. Glasfasern in der Tragschicht 24 andererseits verwendet werden, ist die Kunststoffmatrix in beiden Schichten bevorzugt dieselbe, nämlich Epoxydharz. Dieses eignet sich aufgrund seiner hervorragenden Haftungseigenschaften, mechanischen Eigenschaften und nicht zuletzt wegen seines vergleichsweise geringen Preises sehr gut. Alternativ können beispielsweise aber auch ungesättigte Polyesterharze oder Vinylesterharze verwendet werden.

Für die Tragschicht 24 kommen außer den bewährten Glasfasern auch beispielsweise Kohlefasern als Verstärkungselemente in Betracht. Auch kann der Faden zunächst zu einem Gewebe, Gewirke oder einem sonstigen Gelege vorverarbeitet werden.

Der Kunststoffmatrix der Gleitschicht 22 werden in vielen Anwendungsfällen Festschmierstoffe wie beispielsweise Graphit-Partikel oder PTFE-Partikel beigemischt. Die Tragschicht 24 weist dagegen in aller Regel eine Kunststoffmatrix ohne Beimischung zusätzlicher Bestandteile auf.

Neben dem in Figur 2 dargestellten Radialgleitlager kann das erfindungsgemäße Gleitelement ferner auch die Gestalt eines Bundlagers, einer Anlaufscheibe, eines Loslagers oder Festlagers, einer Lagerschale oder einer Gleitplatte annehmen. Je nachdem können unterschiedliche Laminierverfahren zur Herstellung eingesetzt werden. Beispielsweise können im so genannten Prepreg-Verfahren vorimprägnierte Verstärkungselemente in Form eines Gewebes, Gewirkes oder eines anderen Geleges in einem anschließenden Press- oder Autoklav-Verfahren zu den fertigen Gleitelementen zusammengefügt werden. Sie können aber auch im Injection-Mold-Verfahren hergestellt werden, bei dem vorgefertigte Matten in eine Form eingelegt werden, welche anschließend unter Druck mit dem Kunstharz gefüllt wird. Auch die vorverarbeiteten Gewebe, Gewirke oder sonstigen Gelege können im Wickelverfahren weiterverarbeitet werden.

Die Figuren 3a,b zeigen das Verhalten des Reibungskoeffizienten zwischen einer erfindungsgemäßen Radialgleitlagerbuchse und einer darin gelagerten Welle, welches in einem Testversuch im Trockenlauf ermittelt wurde. Hierbei wurde die Welle mit einer Rauheit von Rₐ=0,4 bis 0,8 um einen Winkel von 45° und mit einer Umfangsgeschwindigkeit von 0,01 m/s hin- und hergedreht. Die dabei radial aufgebrachte spezifische Belastung betrug im Fall der oberen Messkurve 25 MPa (Fig. 3a). Im Fall der unteren Messkurve (Fig. 3b) wurde unter ansonsten identischen Bedingungen eine radiale spezifische Belastung von 50 MPa aufgebracht.

Die Ergebnisse zeigen, dass nach einer kurzen Einlaufphase von etwa 2000 Zyklen jeweils ein minimaler Reibungskoeffizient erreicht wurde, welcher im Fall der höheren Belastung über die gesamte Testdauer von 60000 Zyklen in etwa konstant bei 0,05 lag. Im Fall der geringeren Belastung stieg der Reibungskoeffizient nach Erreichen des Minimums zunächst langsam von etwa 0,06 an, erreichte nach einer Dauer von etwa 15000 Zyklen aber eine Sättigung bei etwa 0,1. Der leicht erhöhte Reibungskoeffizient im Fall der geringeren Belastung steht im Einklang mit der Verschleißrate. Diese lag bei 25 MPa bei einem Wert von 5,1 µm/km (Gleitstrecke), während er im Fall der höheren Belastung von 50 MPa einen Wert von 10,7 µm/km erreichte. Durch den insgesamt erhöhten Verschleiß bei größerer Belastung von 35 µm gegenüber 17,5 µm bei geringerer Belastung wird mehr Festschmierstoff freigesetzt, der den Reibwert senkt. Daher konnte vor allem im Fall der höheren Belastung auch eine signifikante Glättung der druckbeaufschlagten Gleitlagerfläche festgestellt werden.

Die Figuren 4a und 4b zeigen das Verhalten des Reibungskoeffizienten der in einer Radialgleitlagerbuchse gelagerten Welle unter Nasslaufbedingungen, d. h. im Wasser. Die Testbedingungen waren ansonsten die selben wie oben. Auch hierbei zeigt sich, dass der Reibungskoeffizient im Fall der höheren Belastung von 50 MPa, unteres Diagramm in Figur 4b, geringer ist als im Fall der niedrigen Belastung von 25 MPa, oberes Diagramm Figur 4b. Der Reibungskoeffizient erreichte nach einer etwas verlängerten Einlaufphase im Vergleich zum Trockenlauf bei 25 MPa in etwa den gleichen Wert von 0,1. Bei 50 MPa konnte ein im Vergleich zum Trockenlauf etwas erhöhter mittlerer Wert von 0,06 ermittelt werden. Auch hier war eine geringere Verschleißrate bei 25 MPa von 8,1 µm/km und somit ein über die gesamte Testdauer von etwa 47000 Zyklen geringerer Verschließ von 21,25 µm gegenüber 27,2 µm/km bzw. 70 µm bei 50 MPa feststellbar. Wiederum konnte vor allem im Fall der höheren Belastung eine signifikante Glättung der druckbeaufschlagten Gleitlagerfläche festgestellt werden.

In beiden Belastungsfällen war aber keine signifikante Ablösung der Gleitschicht erkennbar. Die Verschleißwerte lagen deutlich unter denen der bekannten Kunststoffgleitelemente.

### Bezugszeichenliste

- 10: Kunststofffaden
- 12: Polyesterfilament
- 14: PTFE-Partikel

- 20: Radialgleitlagerbuchse
- 22: Gleitschicht
- 23: Wickelstruktur (von 22)
- 24: Tragschicht
- 25: Wickelstruktur (von 24)
- 26: Schmutznuten

## Patentansprüche

1. Gleitschicht (22) auf Basis eines faserverstärkten Kunststoffes mit einer Kunststoffmatrix und einem Kunststofffaden (10) als Verstärkungselement,
wobei der Kunststofffaden (10) Polyesterfilamente (12) aufweist, in welche PTFE-Partikel (14) eingearbeitet sind,
**dadurch gekennzeichnet,**
**dass** die PTFE-Partikel (14) nicht zusammenhängend in die Polyesterfilamente (12) eingesponnen sind.

2. Gleitschicht (22) nach Anspruch 1, **dadurch gekennzeichnet, dass** im Kunststofffaden (10) der Anteil der PTFE-Partikel (14) zwischen 2 Gew.-% und 40 Gew.-% und der Anteil der Polyesterfilamente (12) zwischen 60 Gew.-% und 98 Gew.-% beträgt.

3. Gleitschicht (22) nach Anspruch 2, **dadurch gekennzeichnet, dass** im Kunststofffaden (10) der Anteil der PTFE-Partikel (14) zwischen 30 Gew.-% und 36 Gew.-% und der Anteil der Polyesterfilamente (12) zwischen 64 Gew.-% und 70 Gew.-% beträgt.

4. Gleitschicht (22) nach einem der vorstehenden Ansprüche, **dadurch gekennzeichnet, dass** das Verstärkungselement die Struktur eines aus dem Kunststofffaden (10) erzeugten Gewebes oder Gewirkes aufweist.

5. Gleitschicht (22) nach einem der Ansprüche 1 bis 3, **dadurch gekennzeichnet, dass** das Verstärkungselement eine Wickelstruktur (23) aufweist, die durch Wickeln des Kunststofffadens auf einem Wickelkern erzeugt wurde.

6. Gleitschicht (22) nach einem der vorstehenden Ansprüche, **dadurch gekennzeichnet, dass** die Kunststoffmatrix aus einem Kunstharz besteht.

7. Gleitschicht (22) nach Anspruch 6, **dadurch gekennzeichnet, dass** die Kunststoffmatrix aus einem Epoxydharz besteht.

8. Gleitschicht (22) nach einem der vorstehenden Ansprüche, **dadurch gekennzeichnet, dass** die Kunststoffmatrix PTFE-Partikel enthält.

9. Gleitschicht (22) nach Anspruch 8, **dadurch gekennzeichnet, dass** der Anteil der PTFE-Partikel in der Kunststoffmatrix höchstens 40 Gew.-% beträgt.

10. Gleitschicht (22) nach einem der vorstehenden Ansprüche, **dadurch gekennzeichnet, dass** die Kunststoffmatrix Graphit-Partikel enthält.

11. Gleitschicht (22) nach Anspruch 10, **dadurch gekennzeichnet, dass** der Anteil der Grafit-Partikel in der Kunststoffmatrix zwischen 1 Gew.-% und 40 Gew.-% beträgt.

12. Gleitelement (20) mit einer Gleitschicht (22) nach einem der Ansprüche 1 bis 11.

13. Gleitelement (20) nach Anspruch 12, **gekennzeichnet durch** eine Tragschicht (24) aus einem faserverstärkten Kunststoff.

14. Gleitelement (20) nach Anspruch 13, **dadurch gekennzeichnet, dass** der faserverstärkte Kunststoff der Tragschicht (24) eine Kunststoffmatrix und eine Glasfaser als Verstärkungselement aufweist.

15. Gleitelement (20) nach Anspruch 14, **dadurch gekennzeichnet, dass** das Verstärkungselement der Tragschicht (24) die Struktur eines aus der Glasfaser erzeugten Gewebes oder Gewirkes aufweist.

16. Gleitelement (20) nach Anspruch 14, **dadurch gekennzeichnet, dass** das Verstärkungselement der Tragschicht (24) eine Wickelstruktur (25) aufweist, die durch Wickeln der Glasfaser auf einem Wickelkern erzeugt wurde.

17. Gleitelement (20) nach einem der Ansprüche 13 bis 16, **dadurch gekennzeichnet, dass** die Kunststoffmatrix aus einem Kunstharz besteht.

18. Gleitelement (20) nach Anspruch 17, **dadurch gekennzeichnet, dass** die Kunststoffmatrix aus Epoxidharz besteht.

19. Verwendung eines Kunststofffadens (10) mit Polyesterfilamenten (12) und darin eingesponnenen, nicht zusammenhängenden PTFE-Partikeln (14) als Verstärkungselement in einem faserverstärkten Kunststoff zur Herstellung einer Gleitschicht (20) eines Gleitelementes (20).

## Claims

1. Sliding layer (22) based on a fibre-reinforced plastics material having a plastics material matrix and a plastics material thread (10) as a reinforcement element,
wherein the plastics material thread (10) has polyester filaments (12), in which PTFE particles (14) are incorporated,
**characterised in that**
the PTFE particles (14) are spun in a non-coherent manner in the polyester filaments (12).

2. Sliding layer (22) according to claim 1, **characterised in that** in the plastics material thread (10) the proportion of PTFE particles (14) is between 2% by weight and 40% by weight and the proportion of polyester filaments (12) is between 60% by weight and 98% by weight.

3. Sliding layer (22) according to claim 2, **characterised in that** in the plastics material thread (10) the proportion of PTFE particles (14) is between 30% by weight and 36% by weight and the proportion of polyester filaments (12) is between 64% by weight and 70% by weight.

4. Sliding layer (22) according to anyone of the preceding claims, **characterised in that** the reinforcement element has the structure of a woven or knitted fabric which is produced from the plastics material thread (10).

5. Sliding layer (22) according to any one of claims 1 to 3, **characterised in that** the reinforcement element has a winding structure (23) which was produced by winding the plastics material thread on a winding core.

6. Sliding layer (22) according to anyone of the preceding claims, **characterised in that** the plastics material matrix comprises a synthetic resin.

7. Sliding layer (22) according to claim 6, **characterised in that** the plastics material matrix comprises an epoxy resin.

8. Sliding layer (22) according to anyone of the preceding claims, **characterised in that** the plastics material matrix contains PTFE particles.

9. Sliding layer (22) according to claim 8, **characterised in that** the proportion of PTFE particles in the plastics material matrix is a maximum of 40% by weight.

10. Sliding layer (22) according to any one of the preceding claims, **characterised in that** the plastics material matrix contains graphite particles.

11. Sliding layer (22) according to claim 10, **characterised in that** the proportion of graphite particles in the plastics material matrix is between 1% by weight and 40% by weight.

12. Sliding element (20) having a sliding layer (22) according to any one of claims 1 to 11.

13. Sliding element (20) according to claim 12, **characterised by** a carrier layer (24) of a fibre-reinforced plastics material.

14. Sliding element (20) according to claim 13, **characterised in that** the fibre-reinforced plastics material of the carrier layer (24) has a plastics material matrix and a glass fibre as a reinforcement element.

15. Sliding element (20) according to claim 14, **characterised in that** the reinforcement element of the carrier layer (24) has the structure of a woven or knitted fabric produced from the glass fibre.

16. Sliding element (20) according to claim 14, **characterised in that** the reinforcement element of the carrier layer (24) has a winding structure (25) which was produced by winding the glass fibre on a winding core.

17. Sliding element (20) according to any one of claims 13 to 16, **characterised in that** the plastics material matrix comprises a synthetic resin.

18. Sliding element (20) according to claim 17, **characterised in that** the plastics material matrix comprises epoxy resin.

19. Use of a plastics material thread (10) having polyester filaments (12) and non-coherent PTFE particles (14) which are spun therein as a reinforcement element in a fibre-reinforced plastics material for producing a sliding layer (20) of a sliding element (20).

## Revendications

1. Couche de glissement (22) à base d'une matière plastique renforcée par des fibres, comprenant une matrice en matière plastique et un fil de matière plastique (10) en tant qu'élément de renfort,
ledit fil de matière plastique (10) comportant des filaments de polyester (12) dans lesquels des particules de PTFE (14) sont intégrées,
**caractérisée par le fait**
**que** les particules de PTFE (14) sont incorporées par filage dans les filaments de polyester (12), à l'état non cohérent.

2. Couche de glissement (22) selon la revendication 1, **caractérisée par le fait que** la part constitutive des particules de PTFE (14) est comprise entre 2 % en poids et 40 % en poids, et la part constitutive des filaments de polyester (12) est comprise entre 60 % en poids et 98 % en poids dans le fil de matière plastique (10).

3. Couche de glissement (22) selon la revendication 2, **caractérisée par le fait que** la part constitutive des particules de PTFE (14) est comprise entre 30 % en poids et 36 % en poids, et la part constitutive des filaments de polyester (12) est comprise entre 64 % en poids et 70 % en poids dans le fil de matière plastique (10).

4. Couche de glissement (22) selon l'une des revendications précédentes, **caractérisée par le fait que** l'élément de renfort présente la structure d'un tissu ou d'un tricot produit à partir du fil de matière plastique (10).

5. Couche de glissement (22) selon l'une des revendications 1 à 3, **caractérisée par le fait que** l'élément de renfort présente une structure bobinée (23) ayant été produite par bobinage du fil de matière plastique sur un noyau d'enroulement.

6. Couche de glissement (22) selon l'une des revendications précédentes, **caractérisée par le fait que** la matrice en matière plastique est constituée d'une résine synthétique.

7. Couche de glissement (22) selon la revendication 6, **caractérisée par le fait**
**que** la matrice en matière plastique consiste en une résine époxy.

8. Couche de glissement (22) selon l'une des revendications précédentes, **caractérisée par le fait que** la matrice en matière plastique renferme des particules de PTFE.

9. Couche de glissement (22) selon la revendication 8, **caractérisée par le fait**
**que** la part constitutive des particules de PTFE est, au maximum, de 40 % en poids dans la matrice en matière plastique.

10. Couche de glissement (22) selon l'une des revendications précédentes, **caractérisée par le fait que** la matrice en matière plastique renferme des particules de graphite.

11. Couche de glissement (22) selon la revendication 10, **caractérisée par le fait que** la part constitutive des particules de graphite est comprise entre 1 % en poids et 40 % en poids dans la matrice en matière plastique.

12. Elément coulissant (20) pourvu d'une couche de glissement (22) conforme à l'une des revendications 1 à 11.

13. Elément coulissant (20) selon la revendication 12, **caractérisé par** une couche (24) formant substrat, en une matière plastique renforcée par des fibres.

14. Elément coulissant (20) selon la revendication 13, **caractérisé par le fait que** la matière plastique renforcée par des fibres, constituant la couche (24) formant substrat, comprend une matrice en matière plastique et une fibre de verre en tant qu'élément de renfort.

15. Elément coulissant (20) selon la revendication 14, **caractérisé par le fait que** l'élément de renfort de la couche (24) formant substrat présente la structure d'un tissu ou d'un tricot produit à partir de la fibre de verre.

16. Elément coulissant (20) selon la revendication 14, **caractérisé par le fait que** l'élément de renfort de la couche (24) formant substrat présente une structure bobinée (25) ayant été produite par bobinage de la fibre de verre sur un noyau d'enroulement.

17. Elément coulissant (20) selon l'une des revendications 13 à 16, **caractérisé par le fait que** la matrice en matière plastique est constituée d'une résine synthétique.

18. Elément coulissant (20) selon la revendication 17, **caractérisé par le fait que** la matrice en matière plastique consiste en une résine époxy.

19. Utilisation d'un fil de matière plastique (10) comprenant des filaments de polyester (12) et des particules de PTFE (14) non cohérentes, incorporées par filage dans ces derniers, en tant qu'élément de renfort dans une matière plastique renforcée par des fibres, en vue de la fabrication d'une couche de glissement (22) d'un élément coulissant (20).
